# FASCICULE DE BREVET EUROPEEN

(11) **EP 3 237 789 B1**
(45) Date de publication et mention de la délivrance du brevet: **15.07.2020**
(21) Numéro de dépôt: 15823359.3
(22) Date de dépôt: 18.12.2015
(51) Int. Cl.: F16L 57/00, F16L 55/115, E21B 17/00, F16L 55/11

(54) **COMPOSANT DE JOINT FILETÉ TUBULAIRE AVEC DISPOSITIF DE PROTECTION**
ROHRFÖRMIGE SCHRAUBVERBINDUNGSKOMPONENTE MIT SCHUTZVORRICHTUNG
TUBULAR THREADED-JOINT COMPONENT WITH PROTECTOR DEVICE

(30) Priorité: 23.12.2014 FR 1463274; 06.01.2015 FR 1550053
(43) Date de publication de la demande: 01.11.2017
(73) Titulaire: Vallourec Oil and Gas France, 59620 Aulnoye-Aymeries (FR)
(72) Inventeur: AGUILAR MENDEZ, José Antonio, 94240 Veracruz (MX); FELIX, Julie, 44100 Nantes (FR); VIEL, Daniel, 01100 Oyonnax (FR)
(74) Mandataire: Cabinet Netter
(86) Numéro de dépôt international: PCT/FR2015/053634
(87) Numéro de publication internationale: WO 2016/102848

(56) Documents cités:
- WO-A1-2014/053103
- FR-A1- 2 912 730
- FR-A1- 2 998 639
- US-A- 3 485 271
- US-A- 4 487 228
- US-A1- 2005 166 986
- US-A1- 2014 352 837

## Description

L'invention concerne les composants de joints filetés tubulaires, utilisés par exemple dans des applications pétrolières, et plus précisément la protection de l'extrémité de certains de ces composants.

On entend ici par "composant" tout élément ou accessoire utilisé pour forer ou exploiter un puits et destiné à être assemblé par un filetage à un autre composant pour constituer avec cet autre composant un joint fileté tubulaire. Le composant peut être par exemple un tube de relativement grande longueur (notamment d'environ une dizaine de mètres de longueur), un manchon tubulaire de quelques dizaines de centimètres de longueur, un accessoire de ces tubes (dispositif de suspension ou « hanger », pièce de changement de section ou « cross-over », vanne de sécurité, connecteur pour tige de forage ou « tool joint », « sub », et analogues).

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification 7 de l'API définit des connecteurs filetés à épaulement pour tiges de forage rotatif.

Les fabricants de composants de joints filetés tubulaires ont également développé des joints filetés dits supérieurs qui présentent des géométries spécifiques des filetages, et des moyens spécifiques leur procurant de meilleures performances en service, notamment en matière de résistance mécanique et d'étanchéité.

Les composants précités comportent au moins une extrémité mâle ou femelle filetée qui est destinée à être vissée à une extrémité femelle ou mâle filetée correspondante d'un autre composant de forage ou d'exploitation. Il est donc indispensable que leur extrémité filetée, mâle ou femelle, soit le moins possible endommagée, polluée et détériorée entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Aux fins de protection, les extrémités des composants précités étaient généralement enduites juste avant leur assemblage d'une graisse à propriétés anti-grippante.

Il a été proposé dans plusieurs documents de remplacer la graisse par une fine couche de lubrifiant, d'épaisseur prédéterminée, appliquée en usine.

Ainsi, par exemple, les documents US 6,933,264, US 6,869,111 et WO 2003/102457, proposent d'appliquer en usine une couche d'un lubrifiant « semi-sec » exempt de métaux lourds. Les documents US 6,027,145, EP 1211451 et FR 2892174, proposent l'application d'une couche d'un lubrifiant sec à base de particules de lubrifiants solides.

Dans ces cas d'application d'un lubrifiant en usine, il est également et plus particulièrement nécessaire de protéger le mieux possible la couche de produit lubrifiant, dont les extrémités des composants sont enduites, tant d'un enlèvement mécanique que d'une pollution (sable, débris) préjudiciables à l'efficacité du produit lubrifiant.

Pour obtenir ce(s) protection(s), on place généralement, ainsi que l'exige la spécification API 5CT (au paragraphe 12.2), un dispositif de protection sur les extrémités mâle et femelle des composants de joints filetés tubulaires.

De manière générale, un dispositif de protection pour extrémité filetée de composant de joint fileté tubulaire pour le forage ou l'exploitation de puits d'hydrocarbure comprend un manchon de protection destiné à recouvrir le filetage à protéger, associé à un ou plusieurs dispositifs d'étanchéité.

La norme prévoit que le protecteur protège les extrémités contre des endommagements pouvant survenir dans des conditions normales de manutention et de transport du composant. Les protecteurs externes (pour extrémités mâles) couvrent la totalité du filetage sur le composant tubulaire et les protecteurs internes (pour extrémités femelles), de manière équivalente, couvrent la totalité du filetage interne.

En particulier, les protecteurs doivent normalement être conçus pour empêcher les infiltrations de poussière et d'eau au niveau des filetages durant le transport et le stockage. La durée normale de stockage est d'environ un an. Le document US 3,485,271 propose un dispositif de protection d'une extrémité de joint tubulaire utilisé dans l'industrie pétrolière.

La forme des filetages des protecteurs est telle que les filetages du composant tubulaire sont préservée par le protecteur.

Plusieurs dispositifs de ce type ont été proposés, notamment dans EP 0148807, US 2006/0042709, WO 2005/075877 et WO 2005/024282, les trois derniers documents visant plus particulièrement les protecteurs pour joints préalablement enduits de lubrifiant en usine. Il a été mis en évidence que certains présentent des risques d'endommagement du dispositif de protection à la mise en place.

WO2012/028692 prévoit un film élastomère entre le protecteur et le composant, fixé au protecteur par collage ou par anneau d'encastrement, l'anneau étant soudé au protecteur. Le film est muni d'un agent glissant entre le film et le composant. Le film est en interférence avec la zone des filets imparfaits du composant. Le film est déchiré lors du retrait du protecteur et donc à usage unique. L'étanchéité est faible. L'ensemble est difficile à monter sur le composant. Les risques d'endommagement du film sont élevés.

Il a en effet été constaté que, lors de la mise en place du protecteur, le dispositif d'étanchéité pouvait être endommagé, voire arraché, par le filet du composant tubulaire. En effet, le filet usiné possède des arrêtes particulièrement coupantes qui, lors du mouvement de vissage du connecteur, peuvent venir entailler ledit dispositif d'étanchéité. De plus, de telles coupures peuvent donner lieu à la formation de copeaux qui sont susceptibles de rester coincés dans le filet et de le polluer, ce qui n'est pas souhaitable.

L'invention a pour but d'améliorer la situation, et propose pour ce faire un composant de joint fileté tubaire selon les caractéristiques techniques de la revendication 1.

Le terme « aval » est ici considéré par rapport à la partie terminale libre de l'extrémité considérée comme amont. Ainsi, l'aval du filetage correspond à une partie courante ou corps du composant.

Ainsi, en prévoyant que la partie du dispositif d'étanchéité, ou joint, destinée à être en contact étanche avec le composant tubulaire, est déportée en aval du filetage, c'est-à-dire en regard du corps, généralement lisse, du composant lorsque le filetage du manchon commence à s'engager avec le filetage de l'extrémité dudit composant tubulaire, ladite partie du dispositif d'étanchéité est préservée d'un cisaillement par le filet dudit composant fileté lors du vissage. Lors du vissage est imposé au manchon un mouvement de translation combiné à un mouvement de rotation.

Plus précisément, lors d'une première phase de mise en place du protecteur, celui-ci est déplacé en translation sensiblement selon une direction longitudinale du composant tubulaire jusqu'à ce que le filetage du manchon entre en contact avec le filetage du composant tubulaire.

Lors de cette première phase, la partie du dispositif d'étanchéité destinée à être en contact étanche avec le composant tubulaire, se déplace alors également en translation selon la même direction longitudinale jusqu'à venir en aval du filetage du composant tubulaire et être située en regard du corps lisse du composant. La notion de « lisse » s'entend ici par une absence d'aspérité volontaire ou d'arrêté vive. La notion de « lisse » est comprise comme une surface de rugosité connue compatible pour une étanchéité avec une lèvre élastique. La rugosité peut être venue de laminage. La rugosité peut être celle d'un revêtement de l'âme du composant.

Le protecteur est alors vissé sur l'extrémité filetée du composant à protéger lors d'une deuxième phase.

Lors de ce vissage subséquent, la rotation de la partie du dispositif d'étanchéité destinée à être en contact étanche avec le composant tubulaire s'effectue donc intégralement au contact d'une zone du corps du composant tubulaire, en aval du filetage et généralement lisse. Un cisaillement par ledit filetage est évité.

Selon un mode préférentiel de réalisation, le manchon présente en aval de son filetage une longueur supérieure à la longueur du filetage du composant tubulaire à protéger. La partie du dispositif d'étanchéité destinée à venir au contact de la surface du composant est située sensiblement à une extrémité aval dudit manchon. Ainsi, en rallongeant le manchon, la constitution générale du protecteur reste relativement simple, et sa fabrication reste aisée.

Pour une extrémité femelle, la longueur du filetage du manchon et de la partie en aval du filetage peut être supérieure à la somme de la longueur (en projection sur l'axe) du filetage de l'extrémité à protéger et de la distance axiale entre ledit filetage et une surface de butée se raccordant à l'alésage du corps du composant.

De manière préférentielle, le rapport de la distance axiale du filetage du composant tubulaire sur la distance axiale du filetage du manchon du protecteur est supérieur ou égal à 2, de préférence supérieur ou égal à 3.

Avantageusement, le dispositif d'étanchéité est solidaire du manchon. En rendant le dispositif d'étanchéité solidaire du manchon, c'est-à-dire non détachable, les risques de perte du dispositif sont évités.

Selon un mode de réalisation , le dispositif d'étanchéité est solidarisé avec le manchon par surmoulage. Le surmoulage permet notamment une bonne association entre la matière de dispositif d'étanchéité et la matière du manchon.

Préférentiellement, le dispositif d'étanchéité est solidarisé avec le manchon par surmoulage mis en œuvre par injection bi-composant.

De manière avantageusement complémentaire, le protecteur comprend un dispositif d'étanchéité secondaire propre à être placé au contact, d'une part, d'une surface dudit composant, au moins dans la partie terminale libre de l'extrémité du composant, et d'autre part, dudit manchon de manière à assurer une étanchéité en amont dudit filetage.

Les caractéristiques complémentaires avantageuses liées au premier dispositif d'étanchéité peuvent également être appliquées au dispositif d'étanchéité secondaire. Ainsi, le dispositif d'étanchéité secondaire peut notamment être solidaire du manchon, et / ou surmoulé sur le manchon.

De manière avantageusement complémentaire, la surface de contact du dispositif d'étanchéité avec le manchon est supérieure à 10% de la longueur totale du manchon, de préférence supérieure à 20%. Un recouvrement important entre le dispositif d'étanchéité et le manchon permet d'améliorer encore la tenue du dispositif d'étanchéité sur le manchon et apporte une protection supplémentaire, le dispositif d'étanchéité pouvant absorber au moins une partie d'éventuels chocs extérieurs. Ladite surface de contact réduit les risques d'arrachage accidentel du dispositif d'étanchéité lorsque le dispositif d'étanchéité est réalisé par surmoulage sur le manchon.

De manière avantageusement complémentaire, le dispositif d'étanchéité comporte au moins un volet s'étendant au moins au-dessus de la partie du dispositif d'étanchéité destinée à venir au contact de la surface du composant de manière à la protéger au moins partiellement de la lumière. Un tel volet constitue un écran permettant de protéger dans une certaine mesure la partie du dispositif d'étanchéité formant joint de la lumière du soleil, et en particulier des rayons ultraviolets susceptibles d'accélérer son vieillissement et d'affecter ses propriétés élastiques de joint. La durée de vie du dispositif d'étanchéité peut être prolongée au-delà de la durée de vie du matériau exposé aux UV.

Selon l'invention, la partie du dispositif d'étanchéité destinée à venir au contact de la surface du composant tubulaire est élastiquement flexible selon au moins une direction axiale longitudinale du protecteur. Ladite partie peut être élastique radialement.

La mise en œuvre d'une telle partie flexible permet au joint de s'adapter aisément aux légères irrégularités de surface du composant tubulaire. Lors de la mise en place du protecteur, la partie flexible est ainsi amenée à se plier sur elle-même et à s'adapter au diamètre du composant. La mise en place du protecteur reste aisée.

Alternativement, la partie du dispositif d'étanchéité destinée à venir au contact de la surface du composant tubulaire présente une surface de contact en biseau et une section longitudinale qui augmente de l'aval vers l'amont. La présence d'une portion biseautée permet également une adaptation aux variations de diamètre du composant tubulaire.

Selon un premier mode de réalisation préféré, le protecteur est conçu pour une extrémité mâle présentant un filetage extérieur.

Selon un deuxième mode de réalisation préféré, le protecteur est conçu pour une extrémité femelle présentant un filetage intérieur.

La présente invention se rapporte également à un kit d'un protecteur décrit ci-dessus et comprenant au moins un manchon et au moins un dispositif d'étanchéité associé.

La présente invention se rapporte encore à un composant de joint fileté tubulaire pour le forage ou l'exploitation de puits d'hydrocarbures, comprenant une extrémité munie d'au moins un filetage et comprenant une partie terminale libre, ledit composant étant équipé d'un protecteur décrit ci-dessus vissé sur ledit filetage dudit composant tubulaire.

D'autres caractéristiques et avantages de l'invention apparaîtront à l'examen de la description détaillée ci-après, et des dessins annexés, sur lesquels :
- la figure 1 est une représentation schématique en coupe longitudinale d'un protecteur selon un premier mode de réalisation ;
- la figure 2 est une représentation schématique partielle en coupe longitudinale d'une extrémité aval d'un protecteur selon un deuxième mode de réalisation ;
- la figure 3 est une représentation d'une variante de réalisation du protecteur de la figure 2 comprenant un volet de protection du dispositif d'étanchéité ;
- la figure 4 est une représentation d'une deuxième variante de réalisation du mode de réalisation de la figure 2 ;
- les figures 5 et 6 sont des représentations schématiques partielles en coupe longitudinale d'une extrémité aval d'un protecteur selon un troisième mode de réalisation ; et
- les figures 7a et 7b sont des représentations schématiques en demi-coupe longitudinale d'un protecteur selon un quatrième mode de réalisation.

Les dessins annexés pourront non seulement servir à compléter l'invention, mais aussi contribuer à sa définition, le cas échéant.

Un protecteur a pour but de permettre la protection de l'extrémité filetée d'un composant tubulaire d'un joint fileté tubulaire (destiné au forage ou à l'exploitation de puits d'hydrocarbures ou similaires) contre les endommagements mécaniques, les pollutions (chimiques et matérielles) et les détériorations (corrosion) entre la sortie de fabrication et l'utilisation (avec plusieurs montages-démontages possibles du dispositif de protection), mais également entre deux utilisations successives, en limitant (voire même évitant) le raclage et/ou l'élimination du produit lubrifiant de stockage (anticorrosion) et/ou de vissage, plus particulièrement lorsque ledit produit lubrifiant est appliqué de manière permanente (produit lubrifiant de type semi-sec ou sec présenté ci-avant), malgré les variations dimensionnelles du composant tubulaire (notamment de son diamètre extérieur).

Il existe des protecteurs pour des extrémités filetées mâles (filetage externe) et des protecteurs pour des extrémités filetées femelles (filetage intérieur).

Afin de faciliter l'assemblage du protecteur et notamment la mise en place du manchon sur l'extrémité filetée, le dispositif d'étanchéité connu était généralement détachable, l'assemblage du dispositif d'étanchéité et du manchon s'effectuant après leur mise en place sur le composant à protéger. Le caractère détachable de dispositif d'étanchéité entraîne un risque de perte, notamment lors de diverses manipulations du composant.

Par ailleurs, le caractère détachable du dispositif d'étanchéité entraîne également des difficultés pour assurer une étanchéité optimale entre le manchon et la surface métallique du composant, notamment en raison d'imperfections de fabrication sur la surface du composant. Il peut alors être nécessaire de déformer le protecteur pour assurer l'étanchéité.

WO2008/087302 propose une protection par demi-coques avec bridage. Une étanchéité de qualité est obtenue mais le nombre de pièces est élevé.

Dans la demande FR 2 998 639, la Demanderesse a proposé un dispositif de protection offrant une meilleure adaptabilité de l'étanchéité aux écarts dimensionnels des composants tout en restant relativement aisé à monter. Pour ce faire, un dispositif d'étanchéité est retroussé sur le manchon avant d'être déroulé sur le composant tubulaire une fois le manchon mis en place. Il s'ensuit une installation du protecteur relativement plus complexe et plus lente. Par ailleurs, la réalisation d'un dispositif d'étanchéité retroussable nécessite une plus grande quantité d'élastomère.

On considère dans ce qui suit que le composant est destiné au forage ou à l'exploitation de puits d'hydrocarbures et qu'il est équipé d'une extrémité d'un joint fileté tubulaire manchonné de la famille VAM® ou équivalent. Mais, le protecteur selon la présente demande n'est limité ni à ce type de composant, ni au type d'extrémité précité. L'invention concerne en effet tout type de composant de joint fileté tubulaire pour le forage ou l'exploitation et tout type d'extrémité filetée de composant et notamment ceux de type API et ceux de type supérieur (« premium »), tels que les joints filetés tubulaires VAM.

Un composant tubulaire comprend un corps ou partie courante et deux extrémités : deux extrémités mâles, une extrémité mâle et une extrémité femelle, ou deux extrémités femelles. Le composant est généralement réalisé en acier ou en inox.

Le corps comprend un alésage venu de laminage. L'alésage du corps peut présenter une surface intérieure revêtue, par exemple d'un revêtement anticorrosion.

Les surfaces venues de laminage présentent une rugosité et une tolérance diamétrale très supérieures à la rugosité et à la tolérance diamétrale des surfaces usinées. L'alésage du corps peut s'étendre jusqu'à une position axiale différente de la position axiale jusqu'à laquelle s'étend la surface extérieure du corps.

Une extrémité mâle présente au moins un filetage extérieur et au moins une partie terminale libre, le corps du composant tubulaire s'étendant en aval de l'extrémité mâle.

Plus précisément, on entend par « extrémité mâle » la portion d'un composant munie de surfaces usinées et/ou rectifiées en vue de former un joint avec une portion femelle correspondante.

Une extrémité femelle présente au moins un filetage intérieur et au moins une partie terminale libre, le corps du composant tubulaire s'étendant en aval de ladite l'extrémité femelle.

Les filetages d'extrémité, extérieur ou intérieur, peuvent être en une ou plusieurs parties filetées distinctes, disposées selon des surfaces cylindriques ou coniques.

Lorsque la ou une partie filetée est conique, celle-ci peut être subdivisée en une sous-partie dite à filets parfaits, dont le profil est constant et sans irrégularité ou imperfection (par exemple du type bavure) et une sous-partie dite à filets évanouissants ou imparfaits, dont la hauteur est progressivement décroissante et dont le profil peut présenter des irrégularités ou imperfections.

Les filetages d'extrémité peuvent comprendre au moins deux parties filetées distinctes distantes axialement et/ou radialement l'une de l'autre, chacune de ces parties pouvant comprendre des filets parfaits et des filets évanouissants.

La partie terminale libre de l'extrémité du composant se termine généralement par une surface annulaire d'orientation sensiblement transversale.

L'extrémité, mâle ou femelle, peut également comporter une ou plusieurs surfaces de butée axiale pour une extrémité, respectivement femelle ou mâle, d'un autre composant destiné à être assemblé au composant considéré (en extrémité libre, en aval du filetage ou entre deux parties filetées) et une ou plusieurs surfaces d'étanchéité métal/métal (en extrémité libre, en aval du filetage ou entre deux parties filetées) avec l'extrémité considérée. Le protecteur est préférablement conçu pour également protéger ces surfaces de butée et/ou ces surfaces d'étanchéité des endommagements ou blessures et de la corrosion.

Les modes de réalisation exposés ci-après, à titre d'exemple non limitatifs, sont relatifs à une extrémité mâle d'un joint fileté tubulaire.

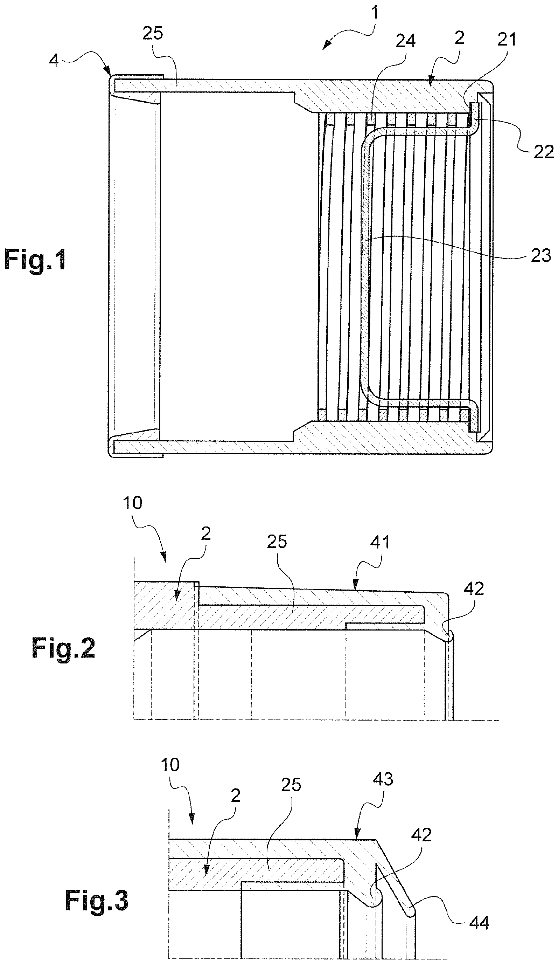

Un protecteur 1, tel que représenté sur la figure 1, comprend d'une manière générale un manchon 2 et un dispositif d'étanchéité 4 coopérant ensemble et prévus pour être placés sur l'extrémité mâle (filetée) d'un composant.

Le manchon 2 est chargé de protéger une partie au moins du filetage extérieur de l'extrémité mâle et la partie terminale libre faisant également partie de l'extrémité mâle. Pour ce faire, le manchon 2 est destiné à être rapporté sur l'extrémité du composant et est conformé en conséquence. En particulier, le manchon présente une portion de forme générale sensiblement tubulaire.

Le manchon 2 est préférablement monobloc. Le manchon peut, par exemple, être réalisé par un procédé d'injection de matière.

La protection étant notamment mécanique, le manchon 2 présente une certaine rigidité tout en étant capable d'absorber au moins partiellement les chocs. Pour ce faire, le manchon 2 peut par exemple être réalisé par injection d'un matériau thermoplastique dans un moule adapté. Parmi les différentes familles de matériaux thermoplastiques qui peuvent être avantageusement utilisées, on peut notamment citer les mélanges à base de polycarbonate comme le polycarbonate-polyester (PC/PBT ou PC/PET) et les polyéthylènes (PE) à haute ou ultra haute densité (PE-HD, PE-UHD).

La spécification API 5CT édition 2005 prévoit dans son annexe I des exigences pour les dispositifs de protection de filetages, notamment des valeurs minimales de résistance aux chocs axiaux et de biais (à 45°) pour trois températures (-46, +21 et +66°C).

On peut par exemple plus particulièrement choisir un PE-HD produit par la société DOW et vendu sous le nom DMBA-8904-NT7 ou produit par la société BASELL et vendu sous le nom LUPOLEN 4261 AG UV 6005, un PE-UHD produit par la société TICONA et vendu sous le nom GUR 5113, ou un PC-PBT produit par la société BAYER et vendu sous le nom MAKROBLEND S7916.

Le manchon 2 comprend une partie terminale amont 21 destinée à être placée au niveau de la partie terminale libre du composant tubulaire, et présentant de préférence une projection radiale vers l'intérieur en forme de collerette 22, épaisse et adaptée pour l'absorption des chocs et coups, et destinée à recouvrir la surface annulaire transversale en extrémité de la partie terminale libre de l'extrémité mâle (surface de butée) afin d'assurer une (seconde) étanchéité continue locale sur toute sa circonférence à ce niveau.

Dans un mode de réalisation, à partir de la collerette 22 s'étend une cloison 23 obturant le manchon du côté opposé au dispositif d'étanchéité 4. La cloison 23 forme un bouchon et est conçue pour pénétrer dans l'alésage du composant tubulaire. Plus précisément, la cloison 23 présente une section sensiblement en U avec une portion radiale 23a et une portion circulaire 23b reliant la portion radiale 23a à la collerette 22.

Alternativement, comme il est visible sur les modes de réalisation suivants, la cloison 23 peut être sensiblement rectiligne et plane, c'est à dire radiale.

La collerette 22 et la cloison 23 constituent une étanchéité secondaire.

Dans un mode de réalisation, ledit protecteur 1 comprend une lèvre périphérique annulaire. La lèvre périphérique annulaire peut être monobloc avec le manchon ou rapportée, notamment par surmoulage d'un matériau élastique.

Ce dispositif d'étanchéité secondaire est en particulier placé au contact d'une surface dudit composant, au moins dans la partie terminale libre de l'extrémité du composant. On évite ainsi l'intrusion de corps étrangers tels que sable, sel, eau, du côté de la partie terminale de l'extrémité du composant.

Dans le cas d'un protecteur pour extrémité mâle, la surface dudit composant est en particulier une surface intérieure. Dans le cas d'un protecteur pour extrémité femelle, la surface dudit composant est en particulier une surface extérieure.

En aval de la partie terminale 21, le manchon est pourvu, sur une surface intérieure, d'un filetage 24 apte à coopérer par complémentarité de forme avec le filetage de l'extrémité du composant tubulaire à protéger. Plus simplement, le filetage 24 est adapté au filetage de l'extrémité du composant à protéger.

Le filetage 24 s'étend axialement sur une distance inférieure ou égale à la distance axiale du filetage de l'extrémité du composant. Il est en effet souhaitable de pouvoir mettre en place et visser rapidement le manchon. Le nombre de tours du filetage 24 du manchon 2 est par conséquent généralement réduit de manière à pouvoir être mis en place en seulement quelques, en particulier 3 ou 4, tours de vissage.

Le manchon s'étend en aval du filetage 24 sur une distance supérieure à la longueur, prise selon une direction longitudinale du composant tubulaire, du filetage dudit composant, jusqu'à une partie terminale aval 25.

La partie terminale aval 25 porte le dispositif d'étanchéité 4. Le dispositif d'étanchéité 4 est destiné à venir au contact d'une surface externe du corps du composant tubulaire à protéger, dans une partie située en aval du filetage de l'extrémité dudit composant.

Le dispositif d'étanchéité 4 est ainsi situé à une distance du filetage 24 qui est supérieure à la longueur du filetage de l'extrémité du composant à protéger.

Ainsi, lors de la mise en place du protecteur 1, lorsque le filetage 24 commence à s'engager avec le filetage de l'extrémité du composant, le dispositif d'étanchéité 4 est situé en aval au-delà dudit filetage de l'extrémité du composant.

Le dispositif d'étanchéité 4 est réalisé dans un matériau élastomère apte à former un joint et à assurer une étanchéité avec le composant tubulaire.

Plus précisément, le dispositif d'étanchéité 4 est réalisé dans un matériau souple, c'est-à-dire déformable, et élastique, c'est-à-dire pouvant reprendre sensiblement sa forme initiale. Ledit matériau peut offrir une élongation à la rupture supérieure à 300%. Pour ce faire, il peut par exemple être réalisé par injection dans un matériau souple résistant à la corrosion, aux attaques chimiques, notamment des solvants industriels et des acides, et à l'exposition prolongée aux rayonnements UV, avec conservation des propriétés mécaniques. Parmi les différentes familles de matériaux qui peuvent être avantageusement utilisées, on peut notamment citer les élastomères néoprènes tel que le Baypren 210 fabriqué par LANXESS, les EPDM tel que Nordel IP Hydrocarbon Rubber fabriqué par DOW, les nitriles, ou l'un de ces matériaux disposé dans une matrice polyoléfine. Le dispositif d'étanchéité 4 peut être constitué par ledit matériau.

Le dispositif d'étanchéité 4 est solidaire du manchon 2.

Plus précisément, le dispositif d'étanchéité 4 est réalisé par moulage sur la partie terminale aval 25 du manchon 2 (surmoulage).

Le surmoulage est réalisé par injection. Lorsque le manchon 2 est également réalisé par injection, il est avantageux de réaliser le protecteur selon un procédé d'injection bi composant.

De manière complémentaire, le dispositif d'étanchéité 4 est conformé de manière à présenter une section sensiblement trapézoïdale avec une surface intérieure biseautée, la section la plus épaisse étant orientée vers l'amont du protecteur.

La mise en œuvre d'une surface biseautée permet une meilleure adaptation du dispositif d'étanchéité aux irrégularités de surface du corps du composant tubulaire.

Plus particulièrement, la surface biseautée réalise un angle de 5 à 45° par rapport à un axe longitudinal du protecteur.

La figure 2 est une représentation schématique partielle en coupe longitudinale d'une extrémité aval 25 d'un protecteur 10 selon un deuxième mode de réalisation.

Le protecteur 10 diffère du protecteur 1 essentiellement par la forme du dispositif d'étanchéité 41.

Le dispositif d'étanchéité 41 présente une partie aval 42 destinée à venir au contact de la surface du composant à protéger possédant une forme arrondie et formant sensiblement un bourrelet périphérique.

En outre, de manière complémentaire, le dispositif d'étanchéité 41 s'étend vers l'amont du protecteur 10, le long d'une surface extérieure du manchon 2 sur une distance relativement importante. Le dispositif d'étanchéité 41 constitue ainsi un revêtement extérieur qui apporte une protection supplémentaire contre des chocs.

De manière préférentielle, la surface de contact du dispositif d'étanchéité avec le manchon est supérieure à 10% de la longueur totale du manchon, de préférence supérieure à 20%.

La figure 3 est une représentation d'une variante de réalisation du protecteur 10 de la figure 2 équipé d'un dispositif d'étanchéité 43. Le dispositif d'étanchéité 43 se différencie du dispositif d'étanchéité 41 en ce qu'il comprend un volet 44 de protection de la partie aval 42 destinée à venir au contact de la surface du composant à protéger.

Le volet 44 permet de limiter l'exposition de la partie aval 42 à la lumière du soleil, et en particulier aux ultra violets.

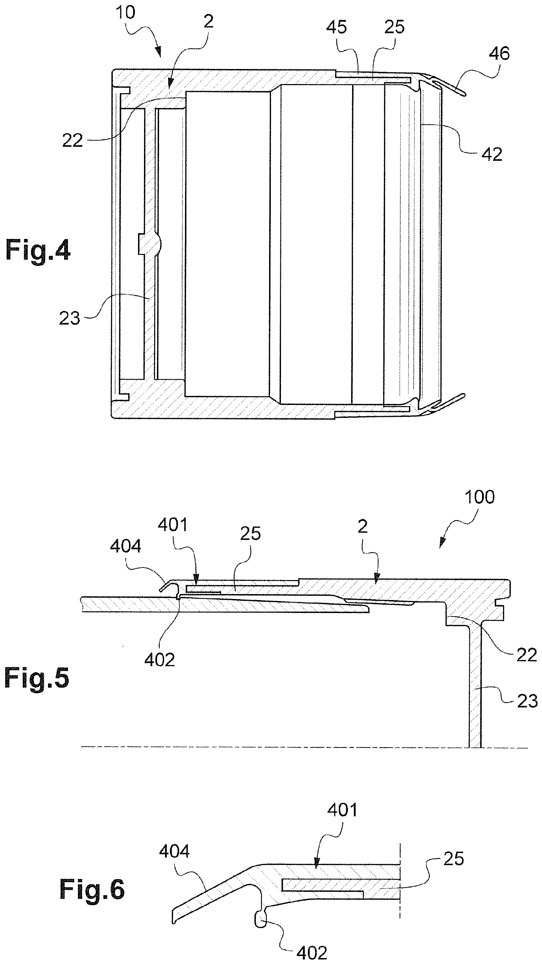

La figure 4 est une représentation d'une autre variante de réalisation du protecteur 10 de la figure 2 équipé d'un dispositif d'étanchéité 45. Le dispositif d'étanchéité 45 se différencie des dispositifs d'étanchéité 41 et 42 en ce qu'il comprend un double volet 46 de protection de la partie aval 42 destinée à venir au contact de la surface du composant à protéger.

Les figures 5 et 6 sont des représentations schématiques partielles en coupe longitudinale d'une extrémité aval d'un protecteur 100 selon un troisième mode de réalisation.

Le protecteur 100 se différencie du protecteur 10 essentiellement par le fait qu'il comprend un dispositif d'étanchéité 401 qui comprend une partie 402 destinée à venir au contact de la surface du composant tubulaire qui est élastiquement flexible. Plus précisément, la partie 402 est élastiquement flexible selon au moins une direction axiale longitudinale du protecteur. La portion de liaison à section restreinte reliant la partie 402 au dispositif d'étanchéité 401 permet de maintenir une étanchéité même en cas de variation dimensionnelle importante de la surface du composant ou du protecteur du fait de variations de fabrication ou de variations thermiques.

La flexibilité de la partie 402 permet une adaptation de l'étanchéité aux irrégularités de surface du composant tubulaire à protéger.

En outre, comme le protecteur 10, le dispositif d'étanchéité 401 du protecteur 100 est équipé d'un volet 404 visant à limiter l'exposition de la partie 402 à la lumière ultra violette.

La figure 4 illustre le joint survolant le filetage du composant avant que les filetages n'engrènent.

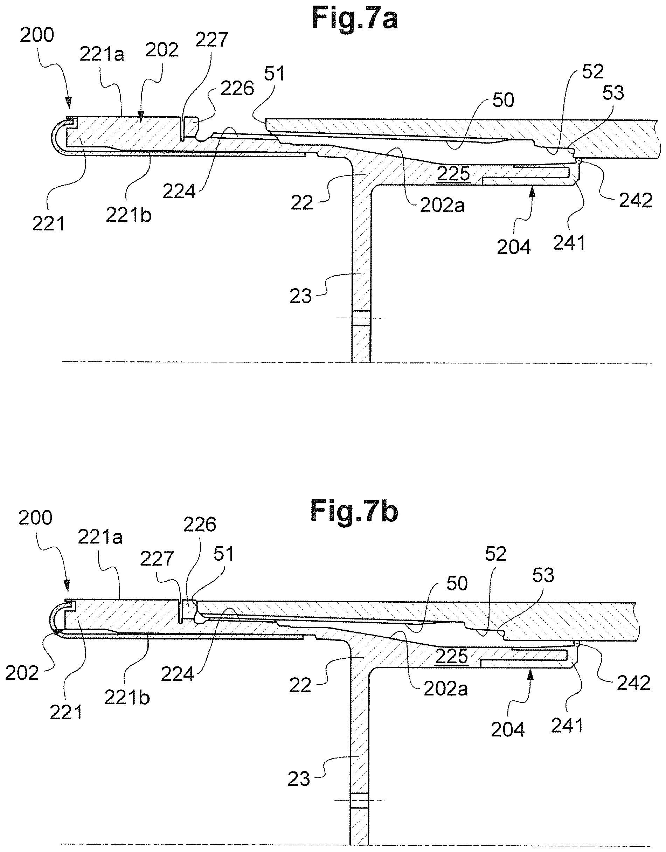

Un protecteur 200, tel que représenté sur les figures 7a et 7b, comprend un manchon 202 et un dispositif d'étanchéité 204 coopérant ensemble et prévus pour être placés sur l'extrémité femelle (filetée) d'un composant. Le dispositif d'étanchéité 204 comprend un corps 241 et une lèvre 242. Les caractéristiques communes avec les modes précédents, notamment de matériaux, ne sont pas décrites à nouveau. L'extrémité femelle comprend un filetage intérieur 50 prolongé par une surface terminale sensiblement radiale 51. Une portée d'étanchéité 52 est usinée du côté du filetage intérieur 50 opposé à la surface terminale 51. Entre la portée d'étanchéité 52 et l'alésage du corps du composant, est ménagée une surface de butée 53 d'orientation radiale prépondérante.

Le manchon 202 est chargé de protéger une partie au moins du filetage intérieur de l'extrémité femelle et, éventuellement, au moins une portée d'étanchéité faisant également partie de l'extrémité femelle. Pour ce faire, le manchon 202 est destiné à être rapporté sur l'extrémité femelle et est conformé à l'extrémité femelle. En demi vue en coupe axiale, le manchon 202 présente une section en forme générale de T.

Le manchon 202 comprend une partie terminale amont 221 destinée à être placée à distance de l'extrémité femelle. La partie terminale amont 221 est épaisse et adaptée pour l'absorption des chocs et coups. La partie terminale amont 221 est destinée à recouvrir la surface annulaire transversale en extrémité de la partie terminale libre de l'extrémité femelle, en général une surface de butée. La partie terminale amont 221 peut assurer une étanchéité continue locale annulaire avec la partie terminale libre de l'extrémité femelle. La partie terminale amont 221 est de forme générale annulaire. La partie terminale amont 221 comprend une surface extérieure 221a et un alésage 221b. A partir de la surface extérieure 221a est ménagée une encoche 227. L'encoche 227 est orientée radialement vers l'intérieur. L'encoche 227 présente une profondeur inférieure à l'épaisseur radiale de la partie terminale amont 221. L'encoche 227 est disposée au voisinage de la partie terminale libre de l'extrémité femelle à l'état vissé, cf figure 7b. L'encoche 227 délimite une portion déformable élastiquement 226 selon la direction axiale de la partie terminale amont 221. La portion déformable élastiquement 226 est située en regard de la surface terminale 51 libre de l'extrémité femelle en cours de vissage, cf figure 7a, et en contact avec la surface terminale 51 de l'extrémité femelle à l'état vissé, cf figure 7b. En fin de vissage, l'encoche 227 se referme au moins en partie formant un indicateur visuel de fin de vissage.

Le manchon 202 comprend une partie terminale aval 225. La partie terminale amont 221 et la partie terminale aval 225 forment la barre supérieure du T. La partie terminale aval 225 supporte le corps d'étanchéité 241. La partie terminale aval 225 présente un alésage de petit diamètre voisin de la partie terminale amont 221 et un alésage de grand diamètre distant de la partie terminale amont 221. La partie terminale aval 225 présente une surface extérieure de grand diamètre voisine de la partie terminale amont 221 et une surface extérieure de petit diamètre distante de la partie terminale amont 221
Ici, le corps d'étanchéité 241 est surmoulé sur l'alésage de grand diamètre. Le corps d'étanchéité 241 est surmoulé sur une surface radiale d'extrémité de la partie terminale aval 225. Le corps d'étanchéité 241 est surmoulé également sur la surface extérieure de petit diamètre. Ainsi, le corps d'étanchéité 241 est fermement fixé à la partie terminale aval 225 par au moins deux surfaces coaxiales. La lèvre 242 est en saillie radialement vers l'extérieur et axialement à l'opposé de la partie terminale amont 221. La lèvre 242 est configurée pour entrer en contact étanche avec un alésage de l'extrémité femelle du composant dans la position de la figure 7b, la partie terminale aval 225 venant en saillie dans ladite extrémité femelle.

Le manchon 202 comprend une surface extérieure tronconique 202a entre la partie terminale aval 225 et la partie terminale amont 221. La surface extérieure tronconique 202a présente un diamètre croissant de la partie terminale aval 225 vers la partie terminale amont 221. La surface extérieure tronconique 202a est configurée pour passer librement dans le filetage femelle de l'extrémité femelle du composant. Le diamètre extérieur de la surface extérieure tronconique 202a est inférieur au diamètre intérieur du filetage femelle. Entre la surface extérieure tronconique 202a et la portion déformable élastiquement 226, le manchon 202 comprend un filetage extérieur 224. Le filetage extérieur 224 est configuré pour être en prise avec le filetage femelle de l'extrémité femelle du composant dans l'état illustré sur la figure 7b. Comme illustré sur la figure 7a, le filetage extérieur 224 vient en contact avec ledit filetage femelle sensiblement au même moment que la lèvre 242 vient en contact avec l'alésage de l'extrémité femelle. Ici, la lèvre 242 vient en contact avec l'alésage d'une partie courante de l'extrémité femelle, c'est-à-dire un alésage situé en aval des régions faisant l'objet d'un usinage.

Le manchon 202 comprend une projection radiale vers l'intérieur en forme de collerette ou de disque 22 formant obturateur. Dans un mode de réalisation, la collerette 22 s'étend en une cloison radiale 23 obturant le manchon du côté opposé au dispositif d'étanchéité 4. La cloison radiale 23 forme un bouchon. La cloison radiale 23 est située axialement dans la région de la surface extérieure tronconique 202a. La collerette 22 permet un décalage radial entre l'alésage de la partie terminale amont 221 et l'alésage de petit diamètre de la partie terminale aval 225. L'alésage de petit diamètre de la partie terminale aval 225 présente un diamètre inférieur au diamètre de l'alésage de la partie terminale amont 221. La cloison radiale 23 peut être munie d'un perçage traversant de faible diamètre permettant un équilibrage de pression, notamment lors de variations barométriques et altimétriques.

Le filetage 224 s'étend axialement sur une distance inférieure ou égale à la longueur axiale du filetage de l'extrémité du composant.

Lors de la mise en place du protecteur 1, lorsque le filetage 224 commence à s'engager avec le filetage de l'extrémité du composant, le dispositif d'étanchéité 4 est situé en aval au-delà dudit filetage de l'extrémité femelle du composant.

L'invention ne se limite pas aux exemples décrits ci-avant, seulement à titre d'exemple, mais elle englobe toutes les variantes que pourra envisager l'homme de l'art dans le cadre des revendications ci-après.

## Revendications

1. Composant de joint fileté tubulaire pour le forage ou l'exploitation de puits d'hydrocarbures, comprenant une extrémité munie d'au moins un filetage et comprenant une partie terminale libre en amont, ledit composant de joint fileté tubulaire étant équipé d'un protecteur, ledit protecteur (1) comprenant :
- un manchon (2), rapporté sur l'extrémité du composant de joint fileté tubulaire et conformé pour protéger ladite partie terminale libre et le filetage de ladite extrémité du composant de joint fileté tubulaire, ledit manchon (2) possédant un filetage (24) venant en prise avec le filetage de l'extrémité du composant de joint fileté tubulaire et s'étendant axialement sur une distance inférieure ou égale à la distance axiale du filetage de l'extrémité du composant de joint fileté tubulaire,
- un dispositif d'étanchéité (4) périphérique monté de manière étanche sur le manchon (2) et placé au contact d'une surface dudit composant de joint fileté tubulaire située en aval du filetage de l'extrémité du composant de joint fileté tubulaire, de manière à assurer une étanchéité en aval dudit filetage,
**caractérisé en ce que** le dispositif d'étanchéité (4) et le manchon (2) sont agencés de manière telle que lors de la mise en place du protecteur sur le composant de joint fileté tubulaire, au moment où le filetage (24) du manchon (2) s'engage avec le filetage de l'extrémité du composant de joint fileté tubulaire de joint tubulaire, au moins une partie du dispositif d'étanchéité (4) venant au contact de la surface dudit composant de joint fileté tubulaire, se situe axialement en aval du filetage de l'extrémité dudit composant de joint fileté tubulaire, et **en ce que** la partie du dispositif d'étanchéité venant au contact de la surface du composant de joint fileté tubulaire est élastiquement flexible selon au moins une direction axiale longitudinale du protecteur.

2. Composant de joint fileté tubulaire selon la revendication 1, **caractérisé en ce que** le manchon (2) présente une longueur en aval du filetage (24) venant en prise avec le filetage de l'extrémité du composant de joint fileté tubulaire qui est supérieure à la longueur du filetage du composant de joint fileté tubulaire, la partie du dispositif d'étanchéité (4) venant au contact de la surface du composant de joint fileté tubulaire étant située sensiblement à une extrémité aval dudit manchon (2).

3. Composant de joint fileté tubulaire selon l'une quelconque des revendications 1 ou 2, **caractérisé en ce que** le rapport de la distance axiale du filetage du composant de joint fileté tubulaire sur la distance axiale du filetage (24) du manchon (2) du protecteur (1) est supérieur ou égal à 2, de préférence supérieur ou égal à 3.

4. Composant de joint fileté tubulaire selon l'une quelconque des revendications 1 à 3, **caractérisé en ce que** le dispositif d'étanchéité (4) est solidaire du manchon (2).

5. Composant de joint fileté tubulaire selon la revendication 4, **caractérisé en ce que** le dispositif d'étanchéité (4) est solidarisé avec le manchon (2) par surmoulage.

6. Composant de joint fileté tubulaire selon la revendication 5, **caractérisé en ce que** le dispositif d'étanchéité (4) est solidarisé avec le manchon (2) par surmoulage mis en œuvre par injection bi-composant de joint fileté tubulaire.

7. Composant de joint fileté tubulaire selon l'une quelconque des revendications 1 à 6, **caractérisé en ce qu'**il comprend un dispositif d'étanchéité secondaire placé au contact, d'une part, d'une surface dudit composant de joint fileté tubulaire, au moins dans la partie terminale libre de l'extrémité du composant de joint fileté tubulaire, et d'autre part, dudit manchon (2) de manière à assurer une étanchéité en amont dudit filetage.

8. Composant de joint fileté tubulaire selon l'une quelconque des revendications 1 à 7, **caractérisé en ce que** la surface de contact du dispositif d'étanchéité (4) avec le manchon (2) est supérieure à 10% de la longueur totale du manchon, de préférence supérieure à 20%.

9. Composant de joint fileté tubulaire selon l'une quelconque des revendications 1 à 8, **caractérisé en ce que** le dispositif d'étanchéité (43) comporte au moins un volet (44) s'étendant au moins au-dessus de la partie du dispositif d'étanchéité (4) venant au contact de la surface du composant de joint fileté tubulaire de manière à la protéger au moins partiellement de la lumière.

10. Composant de joint fileté tubulaire selon l'une quelconque des revendications 1 à 9, **caractérisé en ce que** la partie du dispositif d'étanchéité (4) venant au contact de la surface du composant de joint fileté tubulaire présente une surface de contact en biseau et une section longitudinale qui augmente de l'aval vers l'amont.

11. Composant de joint fileté tubulaire selon l'une quelconque des revendications 1 à 10, **caractérisé en ce qu'**il est conçu pour une extrémité mâle présentant un filetage extérieur.

12. Composant de joint fileté tubulaire selon l'une quelconque des revendications 1 à 11, **caractérisé en ce qu'**il est conçu pour une extrémité femelle présentant un filetage intérieur.

## Patentansprüche

1. Rohrgewindeverbindungskomponente für die Bohrung oder für den Betrieb eines Kohlenwasserstoffbrunnens, die ein Ende enthält, das mit mindestens einem Gewinde versehen ist und stromaufwärts einen freien Endbereich enthält, wobei die Rohrgewindeverbindungskomponente mit einem Schutz ausgestattet ist, wobei der Schutz (1) enthält:
- eine Muffe (2), die auf das Ende der Rohrgewindeverbindungskomponente aufgebracht wird und gestaltet ist, um den freien Endbereich und das Gewinde des Endes der Rohrgewindeverbindungskomponente zu schützen, wobei die Muffe (2) ein Gewinde (24) besitzt, das mit dem Gewinde des Endes der Rohrgewindeverbindungskomponente in Eingriff kommt und sich axial über einen Abstand geringer als der oder gleich dem axialen Abstand des Gewindes des Endes der Rohrgewindeverbindungskomponente erstreckt,
- eine Umfangsdichtung (4), die dicht auf die Muffe (2) montiert und in Kontakt mit einer Fläche der Rohrgewindeverbindungskomponente angeordnet wird, die sich stromabwärts hinter dem Gewinde des Endes der Rohrgewindeverbindungskomponente befindet, um eine Dichtheit stromabwärts hinter dem Gewinde zu gewährleisten,
**dadurch gekennzeichnet, dass** die Dichtung (4) und die Muffe (2) so eingerichtet sind, dass beim Anordnen des Schutzes auf der Rohrgewindeverbindungskomponente in dem Moment, in dem das Gewinde (24) der Muffe (2) in das Gewinde des Endes der Rohrgewindeverbindungskomponente einer Rohrverbindung eingreift, mindestens ein Teil der Dichtung (4), der mit der Fläche der Rohrgewindeverbindungskomponente in Kontakt kommt, sich axial stromabwärts hinter dem Gewinde des Endes der Rohrgewindeverbindungskomponente befindet, und dass der Teil der Dichtung, der mit der Fläche der Rohrgewindeverbindungskomponente in Kontakt kommt, gemäß mindestens einer axialen Längsrichtung des Schutzes elastisch flexibel ist.

2. Rohrgewindeverbindungskomponente nach Anspruch 1, **dadurch gekennzeichnet, dass** die Muffe (2) eine Länge stromabwärts hinter dem Gewinde (24) aufweist, das mit dem Gewinde des Endes der Rohrgewindeverbindungskomponente in Eingriff kommt, die größer ist als die Länge des Gewindes der Rohrgewindeverbindungskomponente, wobei der Teil der Dichtung (4), der mit der Fläche der Rohrgewindeverbindungskomponente in Kontakt kommt, sich im Wesentlichen an einem stromabwärtigen Ende der Muffe (2) befindet.

3. Rohrgewindeverbindungskomponente nach einem der Ansprüche 1 oder 2, **dadurch gekennzeichnet, dass** das Verhältnis des axialen Abstands des Gewindes der Rohrgewindeverbindungskomponente zum axialen Abstand des Gewindes (24) der Muffe (2) des Schutzes (1) größer als oder gleich 2, vorzugsweise größer als oder gleich 3 ist.

4. Rohrgewindeverbindungskomponente nach einem der Ansprüche 1 bis 3, **dadurch gekennzeichnet, dass** die Dichtung (4) fest mit der Muffe (2) verbunden ist.

5. Rohrgewindeverbindungskomponente nach Anspruch 4, **dadurch gekennzeichnet, dass** die Dichtung (4) durch Überformen fest mit der Muffe (2) verbunden ist.

6. Rohrgewindeverbindungskomponente nach Anspruch 5, **dadurch gekennzeichnet, dass** die Dichtung (4) durch Überformen fest mit der Muffe (2) verbunden wird, das durch Zweikomponenten-Spritzguss einer Rohrgewindeverbindung durchgeführt wird.

7. Rohrgewindeverbindungskomponente nach einem der Ansprüche 1 bis 6, **dadurch gekennzeichnet, dass** sie eine sekundäre Dichtung enthält, die in Kontakt einerseits mit einer Fläche der Rohrgewindeverbindungskomponente, zumindest im freien Endbereich des Endes der Rohrgewindeverbindungskomponente, und andererseits mit der Muffe (2) angeordnet wird, um eine Dichtheit stromaufwärts vor dem Gewinde zu gewährleisten.

8. Rohrgewindeverbindungskomponente nach einem der Ansprüche 1 bis 7, **dadurch gekennzeichnet, dass** die Kontaktfläche der Dichtung (4) mit der Muffe (2) größer ist als 10% der Gesamtlänge der Muffe, vorzugsweise größer als 20%.

9. Rohrgewindeverbindungskomponente nach einem der Ansprüche 1 bis 8, **dadurch gekennzeichnet, dass** die Dichtung (43) mindestens eine Klappe (44) aufweist, die sich mindestens oberhalb des Teils der Dichtung (4) erstreckt, der mit der Fläche der Rohrgewindeverbindungskomponente in Kontakt kommt, um sie zumindest teilweise vor Licht zu schützen.

10. Rohrgewindeverbindungskomponente nach einem der Ansprüche 1 bis 9, **dadurch gekennzeichnet, dass** der Teil der Dichtung (4), der mit der Fläche der Rohrgewindeverbindungskomponente in Kontakt kommt, eine abgeschrägte Kontaktfläche und einen Längsschnitt aufweist, der von stromabwärts nach stromaufwärts zunimmt.

11. Rohrgewindeverbindungskomponente nach einem der Ansprüche 1 bis 10, **dadurch gekennzeichnet, dass** sie für ein Einsteckende konzipiert ist, das ein Außengewinde aufweist.

12. Rohrgewindeverbindungskomponente nach einem der Ansprüche 1 bis 11, **dadurch gekennzeichnet, dass** sie für ein Aufnahmeende konzipiert ist, das ein Innengewinde aufweist.

## Claims

1. Tubular threaded joint component for the drilling or exploitation of hydrocarbon wells, comprising an end provided with at least one threaded portion and comprising an upstream free terminal part, said tubular threaded joint component being equipped with a protector, said protector (1) comprising:
- a sleeve (2) attached to the end of the tubular threaded joint component and shaped to protect said free terminal part and the threaded portion of said end of the tubular threaded joint component, said sleeve (2) having a threaded portion (24) that comes to engage with the threaded portion of the end of the tubular threaded joint component and that extends axially over a distance less than or equal to the axial distance of the threaded portion of the end of the tubular threaded joint component,
- a peripheral sealing device (4) mounted in a sealing manner on the sleeve (2) and placed in contact with a surface of said tubular threaded joint component, located downstream of the threaded portion of the end of the tubular threaded joint component so as to ensure a seal downstream of said threaded portion,
**characterized in that** the sealing device (4) and the sleeve (2) are arranged such that, when the protector is installed on the tubular threaded joint component, at the moment where the threaded portion (24) of the sleeve (2) engages with the threaded portion of the end of the tubular threaded joint component of a tubular joint, at least part of the sealing device (4) that comes into contact with the surface of said tubular threaded joint component is located axially downstream of the threaded portion of the end of said tubular threaded joint component, and **in that** the part of the sealing device that comes into contact with the surface of the tubular threaded joint component is elastically flexible in at least one longitudinal axial direction of the protector.

2. Tubular threaded joint component according to Claim 1, **characterized in that** the sleeve (2) has a length downstream of the threaded portion (24), engaging with the threaded portion of the end of the tubular threaded joint component, greater than the length of the threaded portion of the tubular threaded joint component, the part of the sealing device (4) that comes into contact with the surface of the tubular threaded joint component being located essentially at a downstream end of said sleeve (2).

3. Tubular threaded joint component according to either one of Claims 1 and 2, **characterized in that** the ratio of the axial distance of the threaded portion of the tubular threaded joint component to the axial distance of the threaded portion (24) of the sleeve (2) of the protector (1) is greater than or equal to 2, preferably greater than or equal to 3.

4. Tubular threaded joint component according to any one of Claims 1 to 3, **characterized in that** the sealing device (4) is secured to the sleeve (2).

5. Tubular threaded joint component according to Claim 4, **characterized in that** the sealing device (4) is secured to the sleeve (2) by overmoulding.

6. Tubular threaded joint component according to Claim 5, **characterized in that** the sealing device (4) is secured to the sleeve (2) by overmoulding implemented by injection moulding of two tubular threaded joint components.

7. Tubular threaded joint component according to any one of Claims 1 to 6, **characterized in that** it comprises a secondary sealing device placed in contact, on the one hand, with a surface of said tubular threaded joint component, at least in the free terminal part of the end of the tubular threaded joint component, and, on the other hand, with said sleeve (2) so as to ensure upstream sealing of said threaded portion.

8. Tubular threaded joint component according to any one of Claims 1 to 7, **characterized in that** the contact surface between the sealing device (4) and the sleeve (2) is greater than 10% of the total length of the sleeve, preferably greater than 20%.

9. Tubular threaded joint component according to any one of Claims 1 to 8, **characterized in that** the sealing device (43) comprises at least one flap (44) extending at least over that part of the sealing device (4) that comes into contact with the surface of the tubular threaded joint component so as to at least partially protect that part from light.

10. Tubular threaded joint component according to any one of Claims 1 to 9, **characterized in that** that part of the sealing device (4) that comes into contact with the surface of the tubular threaded joint component has a bevelled contact surface and a longitudinal cross-section which increases from downstream to upstream.

11. Tubular threaded joint component according to any one of Claims 1 to 10, **characterized in that** it is designed for a male end having an external threaded portion.

12. Tubular threaded joint component according to any one of Claims 1 to 11, **characterized in that** it is designed for a female end having an internal threaded portion.
